# EUROPÄISCHE PATENTSCHRIFT

(11) **EP 3 120 026 B1**
(45) Veröffentlichungstag und Bekanntmachung des Hinweises auf die Patenterteilung: **10.07.2019**
(21) Anmeldenummer: 15710207.0
(22) Anmeldetag: 18.03.2015
(51) Int. Cl.: F04C 5/00, F04B 43/12

(54) **PUMPE ZUR FÖRDERUNG EINER FLÜSSIGKEIT, INSBESONDERE ZUR FÖRDERUNG EINES ABGASREINIGUNGSADDITIVS**
PUMP FOR CONVEYING A FLUID, IN PARTICULAR FOR CONVEYING AN EXHAUST GAS CLEANING ADDITIVE
POMPE SERVANT À TRANSPORTER UN LIQUIDE, NOTAMMENT POUR TRANSPORTER UN ADDITIF DE PURIFICATION DE GAZ D'ÉCHAPPEMENT

(30) Priorität: 19.03.2014 EP 14290069
(43) Veröffentlichungstag der Anmeldung: 25.01.2017
(73) Patentinhaber: CPT Group GmbH, 30165 Hannover (DE)
(72) Erfinder: HODGSON, Jan, 53840 Troisdorf (DE); MAGUIN, Georges, F-57155 Marly (FR); KOPP, Yves, F-57510 Remering-les-Puttelange (FR)
(86) Internationale Anmeldenummer: PCT/EP2015/055666
(87) Internationale Veröffentlichungsnummer: WO 2015/140206

(56) Entgegenhaltungen:
- EP-A2- 0 819 853
- WO-A1-2012/126544
- US-A- 3 583 838

## Beschreibung

Die Erfindung betrifft eine Pumpe zur Förderung einer Flüssigkeit, die insbesondere dazu geeignet ist, ein Abgasreinigungsadditiv (wie beispielsweise Harnstoff-Wasser-Lösung) in eine Abgasbehandlungsvorrichtung zur Reinigung der Abgase von Verbrennungskraftmaschinen zu fördern.

Abgasbehandlungsvorrichtungen, in denen ein flüssiges Additiv zur Abgasreinigung eingesetzt wird, sind beispielsweise im Kraftfahrzeugbereich weit verbreitet, wobei insbesondere auch Stickstoffoxidverbindungen aus dem Abgas entfernt werden sollen. In derartigen Abgasbehandlungsvorrichtungen wird das so genannte SCR-Verfahren durchgeführt (SCR = *Selective Catalytic Reduction*). Beim SCR-Verfahren werden Stickstoffoxidverbindungen im Abgas mit einem Reduktionsmittel (normalerweise Ammoniak) reduziert. Ammoniak wird im Kraftfahrzeug vielfach nicht direkt bevorratet, sondern in Form eines flüssigen (Abgas-)additivs, welches abgasextern (in einem eigens dafür vorgesehenen externen Reaktor) und/oder abgasintern (in der Abgasbehandlungsvorrichtung) zu Ammoniak umgesetzt wird. Als flüssiges Additiv wird in diesem Zusammenhang bevorzugt Harnstoff-Wasser-Lösung eingesetzt. Eine Harnstoff-Wasser-Lösung mit einem Harnstoffgehalt von 32,5 % ist unter dem Handelsnamen AdBlue® erhältlich.

Das flüssige Additiv wird im Kraftfahrzeug üblicherweise in einem Tank gespeichert und mittels eines Fördermoduls der Abgasbehandlungsvorrichtung zugegeben. Ein Fördermodul umfasst insbesondere eine Pumpe. Weiterhin können dem Fördermodul unter anderem auch folgende Komponenten zugeordnet sein: Filter, Sensor, Ventil und/oder Dosiereinheit.

Problematisch bei einem Fördermodul für flüssiges Additiv ist, dass dieses bei niedrigen Temperaturen einfrieren kann. Eine 32,5 %ige Harnstoff-Wasser-Lösung friert beispielsweise bei -11 °C ein. Derart niedrige Temperaturen können im Kraftfahrzeugbereich insbesondere während langer Stillstandphasen im Winter auftreten. Beim Einfrieren des Additivs tritt eine Volumenvergrößerung auf, die die Leitungen, Kanäle und/oder Komponenten des Fördermoduls beschädigen oder sogar zerstören kann. Hierbei steht insbesondere auch die Pumpe im Fokus. Eine Zerstörung der Pumpe kann beispielsweise dadurch vermieden werden, dass das Fördermodul bei Deaktivierung entleert wird, so dass während einer Stillstandsphase kein flüssiges Additiv in dem Fördermodul verbleibt. Eine andere Vorgehensweise zum Schutz der Pumpe ist, die Komponenten so (flexibel) auszulegen, dass keine Beschädigung durch die Volumenausdehnung des flüssigen Additivs beim Einfrieren auftreten kann.

Insbesondere innerhalb der Pumpe ist es technisch schwierig, Maßnahmen zum Einfrierschutz zu gewährleisten, weil die Pumpe in intensivem Kontakt mit dem flüssigen Additiv sein muss. Darüber hinaus ist eine vollständige Entleerung der Pumpe oft problematisch, weil hierdurch eine Wiederaufnahme der Förderung nach einem Betriebsstop deutlich erschwert wird. Die Pumpe zur Förderung von flüssigem Additiv sollte zudem kostengünstig sein und eine große Haltbarkeit aufweisen. Dies umfasst insbesondere eine hohe Zuverlässigkeit bzw. eine geringe Ausfallwahrscheinlichkeit sowie eine geringe Alterung, wobei hier insbesondere eine Veränderung des Betriebsverhaltens der Pumpe in Folge von Abnutzung gemeint ist.

Darüber hinaus ist gegebenenfalls auch eine exakte Fördermengenlieferfähigkeit bei der Pumpe wichtig. Damit, bzw. mit dem Begriff "Dosiergenauigkeit", ist hier insbesondere gemeint, dass die von der Pumpe tatsächlich geförderte Flüssigkeitsmenge genau von eindeutig bestimmbaren Eingangsgrößen vorgegeben ist, wobei der Begriff "Eingangsgrößen" hier insbesondere die elektrische Ansteuerung des Antriebs der Pumpe (Spannungsprofil und/oder Stromprofil zum Antrieb der Pumpe, Frequenz von Strompulsen zum Antrieb der Pumpe, usw.) beschreibt. Insbesondere ist es wichtig, dass die Anzahl und/oder Relevanz von Quereinflüssen, die die Abhängigkeit der Fördermenge von den Eingangsgrößen beeinflussen, gering gehalten wird. Derartige Quereinflüsse könnten beispielsweise die Temperatur der Pumpe, der Druck in der Pumpe, usw. sein. Wenn signifikante Quereinflüsse nicht vermeidbar sind, sollte die Auswirkung dieser Quereinflüsse auf die Fördermenge möglichst genau berechnet bzw. kontrolliert werden können. Die Dosiergenauigkeit einer Pumpe kann beispielsweise durch eine statistische Abweichung zwischen einer erwarteten, gewünschten Fördermenge und einer tatsächlich geförderten Fördermenge beschrieben werden. Beispielsweise hat eine Pumpe eine hohe Dosiergenauigkeit, wenn diese Abweichung im Mittel weniger als 10 Prozent beträgt. Eine Dosiergenauigkeit kann (für HWL-Fördermengen beim SCR- Verfahren) beispielsweise als gering angesehen werden, wenn diese Abweichung im Mittel mehr als 20 Prozent beträgt. Diese Prozentwerte sind jeweils nur als Beispiel zu verstehen.

Aus den Druckschriften US 2,544,628, US 3,408,947, DE 285 39 16 AI und DE 381 52 52 A1 ist ein Pumpentyp bekannt, der auch als Orbitalpumpe bezeichnet wird. Dieser Pumpentyp ist einerseits verhältnismäßig beständig gegenüber einer Volumenausdehnung einer Flüssigkeit beim Einfrieren, andererseits kann dieser Pumpentyp auch mit umgekehrter Förderrichtung betrieben werden, so dass eine Entleerung eines Fördermoduls technisch einfach möglich ist. Es besteht jedoch das Bedürfnis, diesen Pumpentyp an die Anforderungen im Umfeld des SCR-Verfahrens anzupassen, insbesondere hinsichtlich der Dosiergenauigkeit und/oder des Alterungsverhaltens (z. B. infolge erheblicher Spannungszustände in der Pumpenmembran).

Aus der US 3583838 A und der EP 819853 A2 sind Pumpen mit einem beweglichen Element bekannt, dessen radiale Seitenflächen von je einem L-förmigen Ring umschlossen sind.

Hiervon ausgehend ist es Aufgabe der hier vorliegenden Erfindung, eine besonders vorteilhafte Pumpe zur Förderung einer Flüssigkeit vorzustellen, die die vorstehenden Probleme zumindest teilweise löst und insbesondere zur Förderung von flüssigen Additiven zur Abgasreinigung (wie Harnstoff -Wasser-Lösung) geeignet ist.

Diese Aufgabe wird gelöst mit einer Pumpe gemäß den Merkmalen des Patentanspruchs 1. Weitere vorteilhafte Ausgestaltungen der Pumpe sind in den abhängigen Patentansprüchen angegeben. Es wird eine Pumpe zur Förderung einer Flüssigkeit vorgeschlagen, welche zumindest ein Pumpengehäuse mit einer rotations symmetrischen Innenumfangsfläche mit einer geometrischen Achse und mit mindestens einem Einlas s und mindestens einem Auslass aufweist: Innerhalb des Pumpengehäuses ist ein Exzenter angeordnet, der um die geometrische Achse relativ zu dem Pumpen gehäuse drehbar ist, wobei in einem Pumpspalt zwischen der Innenumfangsfläche des Pumpengehäuses und einer Außenfläche des Exzenters ein (ringförmiges) verformbares Element angeordnet ist, und wobei mit dem verformbaren Element und der Innenumfangsfläche des Pumpengehäuses ein Förderkanal von dem mindestens einen Einlass zu dem mindestens einen Auslass ausgebildet ist und wobei weiter das verformbare Element von der Außenfläche des Exzenters abschnittsweise derart gegen das Pumpengehäuse gedrückt wird, dass mindestens eine verschiebbare Abdichtung des Förderkanals und zumindest ein geschlossenes Pumpenvolumen in dem Förderkanal ausgebildet sind, die zur Förderung der Flüssigkeit durch eine Drehung des Exzenters entlang des Förderkanals von dem Einlass zu dem Auslass verschiebbar sind, wobei das verformbare Element in Richtung der geometrischen Achse an einer oder beiden Seiten einen Überstand über die das verformbare Element berührende Außenfläche des Exzenters aufweist und in mindestens einem Überstand innen einen Zentrierungsring aufweist, wobei der mindestens eine Zentrierungsring eine rechteckige Querschnittsfläche aufweist und innerhalb des verformbaren Elements angeordnet ist.

Dadurch wird das verformbare Element in mindestens einen Überstand unterstützt. Vorzugsweise existieren zwei entsprechende Zentrierungsringe mit rechteckiger Querschnittsfläche, die beidseitig (in den Randbereichen) innerhalb des verformbaren Elementes angeordnet sind.

Eine Pumpe mit diesem Aufbau kann auch als Orbitalpumpe bezeichnet werden.

Die Pumpe weist eine (zentrale) geometrische Achse auf, um die herum der Exzenter gedreht werden kann. Dafür verläuft vorzugsweise entlang der Antriebsachse eine Antriebswelle, die den Exzenter mit einem (elektrisch betreibbaren) Antrieb verbindet. Der Antrieb ist vorzugsweise entlang der Achse oberhalb und/oder unterhalb des Pumpengehäuses angeordnet. Zur räumlichen Beschreibung der Pumpe und ihrer Komponenten wird im Folgenden eine radiale Richtung angenommen, die senkrecht auf der geometrischen Achse der Pumpe steht und sich ausgehend von der geometrischen Achse der Pumpe in radialer Richtung nach außen erstreckt. Senkrecht zu der geometrischen Achse und zu der radialen Richtung tangential zur Innenumfangsfläche des Pumpengehäuses soll eine Umfangsrichtung definiert werden. Der Förderkanal verläuft von dem Einlass und zu dem Auslass der Pumpe zumindest abschnittsweise entlang dieser Umfangsrichtung durch das Pumpengehäuse bzw. entlang der Innenumfangsfläche des Pumpengehäuses. Zur weiteren Beschreibung der Pumpe wird auch eine Mittelebene der Pumpe definiert. Diese Mittelebene ist senkrecht zu der geometrischen Achse angeordnet. In der Mittelebene liegen das Pumpengehäuse, der Exzenter, das verformbare Element und der Förderkanal.

Das Pumpengehäuse der Pumpe ist vorzugsweise nach Art eines Rings oder einer zylindrischen Kammer aufgebaut, worin der Exzenter innen angeordnet ist. Das Pumpengehäuse kann auch als (äußerer) Stator der Pumpe angesehen werden, wobei der Exzenter als (innerer) Rotor bezeichnet wird. Im Sinne einer kinematischen Umkehr soll die Erfindung auch solche Konstruktionen erfassen, bei denen das Pumpengehäuse mit Einlass und Auslass innen liegt und der Exzenter außen umläuft, wobei sich der Pumpenspalt zwischen Außenumfangsfläche des innenliegenden Pumpengehäuses und einer Innenfläche des Exzenters befindet und der mindestens eine Zentrierungsring sich außen an einem Überstand des verformbaren Elementes befindet. Gemäß dieser Ausführungsform der Pumpe ist es möglich, dass das Pumpengehäuse einen inneren Stator bildet, welcher von dem Exzenter umgeben ist. Dann bildet der Exzenter einen äußeren Rotor. Der Einlass und der Auslass sind an dem Pumpengehäuse angeordnet und ermöglichen das Einströmen und das Ausströmen der Flüssigkeit in das Pumpengehäuse bzw. in den Förderkanal.

Das Pumpengehäuse ist vorzugsweise aus Kunststoff. In dem Pumpengehäuse können Versteifungsstrukturen integriert sein. In einer bevorzugten Ausführungsvariante ist in einem Pumpengehäuse aus Kunststoff eine ringförmige metallische Einlage integriert, die das Pumpengehäuse versteift.

Mit dem Begriff "Exzenter" ist hier insbesondere eine kreisförmige Struktur gemeint, die exzentrisch (außermittig) zu der geometrischen Achse angeordnet ist und durch eine Drehung um die geometrische Achse herum eine exzentrische Bewegung durchführt. Zwischen dem Pumpengehäuse und dem Exzenter ist ein ringförmiger bzw. umlaufender Pumpenspalt gebildet, in dem das verformbare Element angeordnet ist. Der Förderkanal ist (innerhalb des Spalts) zwischen dem verformbaren Element und dem Pumpengehäuse angeordnet und wird von dem Pumpengehäuse und dem verformbaren Element begrenzt. Der Pumpspalt hat mindestens eine Engstelle, die sich durch eine Drehung des Exzenters entlang des Pumpengehäuses bzw. entlang des Förderkanals verschiebt. An der Engstelle ist das verformbare Element gegen das Gehäuse gedrückt, so dass dort die verschiebbare Abdichtung gebildet ist. Hier umfasst sind auch sogenannte "mehrwertige" Exzenter, die eine Mehrzahl von Engstellen des Pumpenspaltes zwischen dem Pumpengehäuse und dem Exzenter ausbilden. Solche "mehrwertigen" Exzenter können beispielsweise durch eine Mehrzahl von Rollen gebildet sein, die innen auf dem verformbaren Element abrollen und die Engstellen ausbilden. Die Oberfläche der Rollen bildet dann die Außenfläche des Exzenters. Der Förderkanal hat zwischen dem Pumpengehäuse und dem verformbaren Element einen für Flüssigkeit durchströmbaren Kanalquerschnitt, der beispielsweise (je nach Größe der Pumpe) an der größten Stelle zwischen 1 mm² [Quadratmillimeter] und 50 mm² betragen kann.

Der Förderkanal ist vorzugsweise ringförmig bzw. umlaufend um die Achse ausgebildet. Der Einlass und der Auslass sind in einer Förderrichtung der Pumpe vorzugsweise mit einem Winkelabstand von mehr als 270° zueinander (gemessen in der Mittelebene) angeordnet. Entgegen der Förderrichtung haben der Einlass und der Auslass damit einen Winkelabstand von weniger als 90° zueinander.

Der Exzenter ist vorzugsweise mehrteilig ausgeführt. Der Exzenter weist vorzugsweise einen inneren Bereich auf, welcher eine exzentrische Drehbewegung ausführt. Zusätzlich kann ein äußerer Lagerring vorgesehen sein, welcher den inneren Bereich umgibt. Zwischen dem inneren Bereich und dem äußeren Lagerring befindet sich vorzugsweise mindestens ein Lager. Dieses Lager kann ein Kugellager oder ein Rollenlager sein. Der innere Exzenterbereich des Exzenters führt im Betrieb eine Drehbewegung um die Achse aus. Aufgrund der exzentrischen Anordnung und ggf. auch aufgrund der äußeren Form des Exzenters ergibt sich eine exzentrische Bewegung einer Oberfläche des Exzenters. Diese exzentrische Bewegung wird auf den äußeren Lagerring übertragen. Durch ein Lager zwischen dem inneren Bereich und einem Lagerring kann eine exzentrische Drehbewegung des inneren Bereichs in eine exzentrische Taumelbewegung des Lagerrings umgewandelt werden, ohne dass der Drehbewegungsanteil der Bewegung des inneren Bereichs mit übertragen wird. Die Tatsache, dass die Bewegung des Lagerrings keinen Drehbewegungsanteil aufweist, ermöglicht es, Schubspannungen in dem verformbaren Element und innere Reibungskräfte der Pumpe zu reduzieren. Das verformbare Element wird durch die Bewegung des Exzenters gewalkt. An einer Kontaktfläche des Exzenters und des verformbaren Elements wirken vorzugsweise nur Druckkräfte und im Wesentlichen keine Reibungskräfte. Eine entsprechende Aufteilung des Exzenters in einen inneren Exzenterbereich und einen Lagerring ist auch möglich, wenn der Exzenter ein äußerer Rotor ist, der um ein (inneres) Pumpengehäuse herum angeordnet ist. Es ist auch möglich, dass auf den äußeren Lagerring verzichtet wird und die Rollen des Lagers unmittelbar auf bzw. an dem verformbaren Element abrollen.

Das verformbare Element ist vorzugsweise derart zwischen dem Exzenter und dem Pumpengehäuse angeordnet, dass der Exzenter das verformbare Element bereichsweise oder abschnittsweise derart gegen bzw. an die Innenumfangsfläche des Pumpengehäuses drückt, dass damit die mindestens eine verschiebbare Abdichtung ausgebildet ist. An der Abdichtung existiert ein (linienförmiger oder flächiger) Kontakt zwischen dem verformbaren Element und der Innenumfangsfläche des Pumpengehäuses, der von der Flüssigkeit nicht durchströmt werden kann.

Anders ausgedrückt, liegt das verformbare Element vollständig an dem Pumpengehäuse an, so dass der Kanalquerschnitt im Bereich dieser verschiebbaren Abdichtung keine Querschnittsfläche hat. Der Förderkanal ist demnach im Bereich der verschiebbaren Abdichtung unterbrochen. Damit ist innerhalb des Förderkanals auch mindestens ein geschlossenes Pumpenvolumen gebildet. Mit einem geschlossenen Pumpenvolumen ist gemeint, dass ein zumindest einseitig (stromaufwärts oder stromabwärts entlang des Förderkanals) verschlossener Abschnitt des Förderkanals existiert. Durch eine Verschiebung der verschiebbaren Abdichtung wird auch das mindestens eine geschlossene Pumpenvolumen verschoben, so dass die Flüssigkeit, die sich in dem geschlossenen Pumpenvolumen befindet, gefördert wird. Vorzugsweise werden bei dem Betrieb der Pumpe mehrere geschlossene Pumpenvolumina von dem Einlass der Pumpe zu dem Auslass der Pumpe verschoben, um die Flüssigkeit zu fördern. Damit wird ein geschlossenes Pumpenvolumen in der Nähe des Einlasses ausgebildet (definiert zumindest einseitig verschlossen) und dann am Auslass aufgelöst (definiert zumindest einseitig wieder geöffnet). An dem Einlass ist ein geschlossenes Pumpenvolumen (nur) einseitig stromab durch eine verschiebbare Abdichtung verschlossen und stromauf mit dem Einlass verbunden, so dass Flüssigkeit durch den Einlass in das geschlossene Pumpenvolumen einströmen kann. An dem Auslass ist das geschlossene Pumpenvolumen (nur noch) einseitig, allerdings stromauf durch eine Abdichtung verschlossen, und stromab mit dem Auslass verbunden, so dass die Flüssigkeit durch den Auslass aus dem geschlossenen Pumpenvolumen ausströmen kann. Dazwischen existiert (auf dem Weg des geschlossenen Pumpenvolumens von dem Einlass zu dem Auslass) eine Phase, in der das geschlossene Pumpenvolumen stromaufwärts und stromabwärts durch die mindestens eine verschiebbare Abdichtung verschlossen ist.

Das verformbare Element kann auch als verformbare Membran bezeichnet werden. Mit dem Begriff "Membran" ist hier keine zwingende Aussage darüber getroffen, ob das verformbare Element eine flächige Ausdehnung hat. Der Begriff "Membran" soll als Hinweis verstanden werden, dass es sich bei dem verformbaren Element um eine flexible Struktur handelt, die zur Förderung von Flüssigkeit verformt werden kann. Als Material für das verformbare Element bzw. die verformbare Membran wird vorzugsweise ein Elastomermaterial (beispielsweise Kautschuk oder Latex) verwendet. Zur Erhöhung der Haltbarkeit und/oder zur Herstellung und Aufrechterhaltung der Flexibilität kann das Material des verformbaren Elements Zusatzstoffe enthalten. Vorzugsweise ist das verformbare Element in alle Richtungen (in axialer Richtung, in radialer Richtung und in Umfangsrichtung) flexibel. Es ist allerdings auch möglich, dass das verformbare Element eine teilweise gerichtete Flexibilität hat. Beispielsweise kann es eine höhere Flexibilität in radialer Richtung als in Umfangsrichtung und in axialer Richtung aufweisen. Ein Verformen des verformbaren Elements in einer Richtung bedingt typischerweise auch eine Verformung in andere Richtungen. Das verformbare Element dehnt sich beispielsweise in axialer Richtung und/oder in Umfangsrichtung aus, wenn es in radialer Richtung zusammengedrückt wird.

An der Pumpe ist vorzugsweise auch eine stationäre Abdichtung vorgesehen, die eine nicht gewollte Rückströmung der Flüssigkeit von dem Auslass zu dem Einlass (entgegen der Förderrichtung) verhindert. Die stationäre Abdichtung kann ortsfest mit dem Pumpengehäuse bereitgestellt werden und zwischen dem Auslass und dem Einlass positioniert sein. Das verformbare Element kann im Bereich der stationären Abdichtung beispielsweise an dem Pumpengehäuse angeklemmt oder angeklebt sein, um eine fluiddichte Abdichtung zwischen dem Pumpengehäuse und dem verformbaren Element dauerhaft zu gewährleisten. Die stationäre Abdichtung ist unabhängig von der Position des Exzenters fluiddicht.

Mit der Pumpe ist vorzugsweise eine Förderung von Flüssigkeit in Förderrichtung von dem Einlass zu dem Auslass möglich. Durch eine Umkehr der Drehrichtung des Exzenters ist gegebenenfalls auch eine Umkehr der Förderrichtung (anstatt vom Einlass zum Auslass, umgekehrt vom Auslass zurück zum Einlass) möglich.

Das verformbare Element ist vorzugsweise selbst ringförmig bzw. zylindrisch. In Richtung der geometrischen Achse hat das verformbare Element dann beidseitig jeweils einen ringförmigen Überstand. In diesen Überständen ist jeweils ein starrer Zentrierungsring angeordnet. Vorzugsweise ist der (starre) Zentrierungsring gegenüber dem Pumpengehäuse (geringfügig) beweglich, wenn das verformbare Element mit den starren Zentrierungsringen in dem Pumpengehäuse angeordnet ist. Der starre Zentrierungsring wird durch das verformbare Element innerhalb des Pumpengehäuses zentriert. Der starre Zentrierungsring klemmt die Überstände des verformbaren Elements zwischen der Innenumfangsfläche des Pumpengehäuses und dem Zentrierungsring (vorzugsweise vollständig umlaufend) ein. Hierdurch werden Abdichtkontakte zwischen dem verformbaren Element und dem Pumpengehäuse in den Überständen des verformbaren Elementes gewährleistet. Die Abdichtkontakte dichten den Förderkanal zwischen dem Pumpengehäuse und dem verformbaren Element in axialer Richtung (beidseitig) ab. Die Überstände bilden in Richtung der geometrischen Achse der Pumpe beidseitig jeweils Randbereiche des verformbaren Elementes aus.

Vorzugsweise existieren an dem verformbaren Element zwei starre Zentrierungsringe, die beidseitig an umlaufenden Überständen des verformbaren Elements angeordnet sind. Wenn hier von dem "mindestens einem" Zentrierungsring die Rede ist, soll hier insbesondere auch eine Ausführungsvariante erfasst sein, die genau zwei Zentrierungsringe aufweist, die beidseitig an Überständen des verformbaren Elementes angeordnet sind. Für die im Zusammenhang mit den Zentrierungsringen beschriebenen weiteren Elemente (Abdichtkontakt, Aufdickung, Aufnahme, Gegenhalter, Anlagefläche, Überstand etc.) wurde eine entsprechende Formulierung gewählt, so dass hier auch häufig von "mindestens einem" solchen Element die Rede ist. Vorzugsweise sind allerdings auch diese Elemente beidseitig ausgebildet, so dass genau zwei Abdichtkontakte, Aufdickungen, Aufnahmräume, Gegenhalter, Anschlagsflächen, Überstände etc. offenbart sein sollen. Durch diese Formulierungsweise soll auch eine Pumpe umfasst sein, bei der die beschriebenen Elemente und insbesondere ein beschriebener Zentrierungsring nur auf einer Seite einer Mittelebene der Pumpe ausgebildet sind, wobei auf der anderen Seite der Mittelebene ein anderer (abweichender) Aufbau der Pumpe verwirklicht ist. Bevorzugt ist allerdings, dass die Pumpe symmetrisch zu der Mittelebene aufgebaut ist, so dass sämtliche auf einer Seite der Pumpe vorhandenen Elemente (Zentrierungsring, Gegenhalter, Abdichtkontakt, Aufdickung, Aufnahmeraum, Anlagefläche, Überstand etc.) auf der anderen Seite der Mittelebene (spiegelbildlich) ein weiteres Mal vorhanden sind.

Die beschriebenen Elemente (Zentrierungsringe, Gegenhalter, Abdichtkontakt, Aufdickung, Aufnahme, Anlagefläche, Überstand etc.) sind darüber hinaus vorzugsweise alle ringförmig ausgebildet. Hiermit ist gemeint, dass die Elemente (zumindest abschnittsweise) rotationssymmetrisch zu der geometrischen Achse der Pumpe ausgebildet sind. Insbesondere im Bereich der stationären Abdichtung weichen die genannten Elemente allerdings regelmäßig von der rotationssymmetrischen Form ab. Die genannten Elemente sind dort beispielsweise unterbrochen. Die genannten Elemente werden hier trotz bereichsweiser Abweichungen von der rotationssymmetrischen Form als "ringförmig" bezeichnet. Daher ist mit dem Begriff "ringförmig" hier insbesondere auch "zumindest abschnittsweise ringförmig", "überwiegend ringförmig" und/oder "teilweise ringförmig" zu verstehen.

Der mindestens eine Zentrierungsring liegt vorzugsweise (zumindest teilweise) auf einer Innenseite des verformbaren Elements. Der mindestens eine Überstand des verformbaren Elementes ist somit vorzugsweise zwischen dem mindestens einen Zentrierungsring und dem Pumpengehäuse eingequetscht. Der mindestens eine Zentrierungsring unterstützt mindestens einen Überstand des verformbaren Elementes. Wenn sich ein Druck in dem Förderkanal erhöht, wird der Überstand bzw. ein dort befindlicher Randbereich des verformbaren Elements zwischen dem mindestens einen Zentrierungsring und dem Pumpengehäuse stärker gequetscht, weil mehr Material des verformbaren Elements (in axialer Richtung) nach außen gedrückt wird. Hierdurch wird die Anpresskraft an Abdichtkontakten zwischen dem Pumpengehäuse und dem verformbaren Element erhöht. Die Dichtheit der Abdichtkontakte erhöht sich also bei erhöhtem Druck. Der mindestens eine Zentrierungsring bildet mindestens einen Gegenhalter für den Überstand des verformbaren Elementes aus. Zwischen dem mindestens einen Gegenhalter und dem Pumpengehäuse ist jeweils (für jeden Gegenhalter, bzw. für jeden Zentrierungsring) ein Aufnahmeraum zur Aufnahme eines Überstands des verformbaren Elementes gebildet. Der mindestens eine Zentrierungsring ist vorzugsweise starr. Insbesondere ist der Zentrierungsring starr im Vergleich zu dem verformbaren Element, so dass das verformbare Element zwischen dem Zentrierungsring und dem Pumpengehäuse gequetscht werden kann, ohne dass eine substantielle Verformung des Zentrierungsrings auftritt.

Die an dem mindestens einen Abdichtkontakt wirkenden Anpresskräfte wirken in axialer Richtung und damit parallel zu Anpresskräften, die an der verschiebbaren Abdichtung (und ggf. auch an der stationären Abdichtung) wirken. Mehrachsige Spannungszustände innerhalb des verformbaren Elementes werden damit wirkungsvoll verhindert.

Durch die beschriebene Gestaltung einer Pumpe kann eine besonders hohe Dichtigkeit der Pumpe bei unterschiedlichen Drücken innerhalb des Förderkanals erreicht werden. Auch wird dadurch eine hohe Sicherheit der Pumpe gegen Zerstörung bei Einfrieren der Flüssigkeit innerhalb der Pumpe gewährleistet. Die Ausbildung von Abdichtkontakten zur seitlichen (axialen) Abdichtung des Förderkanals mit Zentrierungsringen gewährleistet eine hohe Dichtigkeit der Pumpe bei gleichzeitig besonders gleichmäßiger Spannungsverteilung innerhalb des verformbaren Elementes. Insbesondere wirken alle in dem verformbaren Element wirkenden Abdichtkräfte (an den Abdichtkontakten, an der verschiebbaren Abdichtung und vorzugsweise auch an der stationären Abdichtung) im Wesentlichen parallel zueinander in radialer Richtung. Hierdurch werden mehrachsige Spannungszustände in dem verformbaren Element reduziert bzw. vermieden. Die gleichmäßige Spannungsverteilung und insbesondere auch das Vermeiden von mehrachsigen Spannungszuständen innerhalb des verformbaren Elementes bewirken eine geringe Alterung und hohe Haltbarkeit der Pumpe. Durch die selbstzentrierende Eigenschaft der Zentrierungsringe mit besonders niedrigen Kräften erreicht werden kann, kann auch das gesamte Spannungsniveau innerhalb des verformbaren Elementes niedrig gehalten werden, weil die Anpresskraft an den Abdichtkontakten sich selbständig vergleichmäßigt. Dies verbessert die Haltbarkeit und die Alterungseigenschaften der Pumpe weiter.

So ein Zentrierungsring (mit rechteckiger Querschnittsfläche) benötigt besonders wenig zusätzlichen Bauraum innerhalb des Pumpengehäuses. Insbesondere kann ein verformbares Element mit derartigen Zentrierungsringen auch in das Pumpengehäuse einer Pumpe eingesetzt werden, in welchen es üblicherweise nicht vorgesehen ist, ein verformbares Element mit Zentrierungsring zu verwenden, weil die Zentrierungsringe innerhalb des verformbaren Elementes wenig oder sogar keinen zusätzlichen Bauraum benötigen.

Besonders vorteilhaft ist in diesem Zusammenhang, wenn der mindestens eine Zentrierungsring in das verformbare Element eingelassen ist. Vorzugsweise sind zwei Zentrierungsringe jeweils beidseitig (in den Überständen) des verformbaren Elementes eingelassen.

Die Zentrierungsringe können beispielsweise in Ausnehmungen des verformbaren Materials des verformbaren Elements eingesetzt sein. So kann der mindestens eine Zentrierungsring besonders fest und dauerhaft mit dem Material des verformbaren Elementes verbunden werden. Darüber hinaus wird von dem verformbaren Element und dem mindestens eine Zentrierungsring ein in sich abgeschlossenes, kompaktes Bauteil gebildet.

Weiterhin vorteilhaft ist die Pumpe, wenn mindestens ein ringförmiger Überstand des verformbaren Elements zwischen dem Pumpengehäuse und dem mindestens einen Zentrierungsring in radialer Richtung verspannt ist. Vorzugsweise sind beide (in axialer Richtung außen liegende) Überstände des verformbaren Elementes jeweils zwischen dem Pumpengehäuse und einem Zentrierungsring in radialer Richtung verspannt.

Darüber hinaus vorteilhaft ist die Pumpe, wenn der mindestens eine Zentrierungsring in axialer Richtung seitlich an einer Anlagefläche des Pumpengehäuses anliegt. Vorzugsweise liegen zwei Zentrierungsringe vor, die beide jeweils in axialer Richtung seitlich des verformbaren Elementes an einer Anlagefläche anliegen.

Hierdurch ist durch einen zusätzlichen Druck innerhalb des Förderkanals zwischen dem verformbaren Element und dem Pumpengehäuse keine Verschiebung des mindestens einen Zentrierungsrings möglich. Der mindestens eine Zentrierungsring bildet einen seitlichen Anschlag für das verformbare Element, wobei der Zentrierungsring wiederum an der Anlagefläche des Pumpengehäuses anliegt. Eine solche Gestaltung ist insbesondere im Zusammenhang mit L-förmigen Zentrierungsringen vorteilhaft, die einen axialen Abschluss des verformbaren Elements bilden. Bei Zentrierungsringen mit einer rechteckigen Querschnittsfläche, die innerhalb des verformbaren Elements angeordnet sind, ist normalerweise eine (geringe) axiale Bewegung der Zentrierungsringe gegenüber dem Pumpengehäuse zulässig. Die mindestens eine Anschlagfläche wird vorzugsweise von mindestens einem Gehäuseflansch an einem Hauptteil des Pumpengehäuses gebildet, welcher das Pumpengehäuse in axialer Richtung zumindest teilweise verschließt bzw. abschließt.

Weiterhin vorteilhaft ist die Pumpe, wenn der mindestens eine Zentrierungsring in radialer Richtung beweglich gelagert ist. Vorzugsweise existieren zwei in radialer Richtung beweglich gelagerte Zentrierungsringe.

Insbesondere sind die Zentrierungsringe nicht mit dem Pumpengehäuse verbunden und können gegenüber dem Pumpengehäuse in radialer Richtung verschoben werden. Dies ermöglicht die selbstzentrierenden Eigenschaften der Zentrierungsringe mit Bezug auf das Pumpengehäuse. Hierdurch werden die Spannungen innerhalb des verformbaren Elements reduziert und insbesondere wird die Dichtwirkung an den Abdichtkontakten zwischen dem Pumpengehäuse und dem verformbaren Element mit besonders geringen Spannungen innerhalb des verformbaren Elements realisiert.

Weiterhin vorteilhaft ist die Pumpe, wenn der mindestens eine Überstand des verformbaren Elements in axialer Richtung seitlich an einer Anlagefläche des Pumpengehäuses anliegt. Vorzugsweise liegen beide Überstände des verformbaren Elementes (beidseitig) in axialer Richtung seitlich an einer Anlagefläche des Pumpengehäuses an.

Auch vorteilhaft ist die Pumpe, wenn das Pumpengehäuse eine innere Umfangsfläche hat, an der die Außenfläche des verformbaren Elements anliegt, wobei die axialen Überstände des verformbaren Elements ringförmige Abdichtkontakte an der inneren Umfangsfläche des Pumpengehäuses ausbilden.

Die innere Umfangsfläche ist vorzugsweise in axialer Richtung breiter als der zwischen Umfangsfläche und verformbaren Element gebildete Förderkanal. In diesem Zusammenhang ist die Breite des Förderkanals der Abstand zwischen den beiden (ringförmigen) Abdichtkontakten in axialer Richtung. Hierdurch kann auch bei einer seitlichen Verschiebung der Abdichtkontakte (in axialer Richtung) sichergestellt werden, dass die Abdichtkontakte immer an der Umfangsfläche des Pumpengehäuses anliegen. Eine solche seitliche Verschiebung der Abdichtkontakte kann beispielsweise durch ansteigenden Druck in dem Förderkanal auftreten.

Weiterhin vorteilhaft ist die Pumpe, wenn der mindestens eine axiale Überstand des verformbaren Elements an der Außenfläche mindestens eine umlaufende Aufdickung aufweist. Vorzugsweise ist an beiden Überständen beidseitig jeweils eine umlaufende Aufdickung ausgebildet.

Durch eine umlaufende Aufdickung in den Überständen existiert in den Überständen des verformbaren Elements zusätzliches Material, mit dem die Abdichtkontakte zwischen dem verformbaren Element und dem Pumpengehäuse ausgebildet werden. Die Aufdickungen wirken wie O-Ring-Dichtungen, die den Förderkanal beidseitig abdichten. Eine O-Ringdichtung ist ein besonders wirkungsvolles Dichtungskonzept, dessen Dichtwirkung bekannt ist. Insbesondere ist es möglich, die druckabhängige Dichtwirkung des Abdichtkontakts in Abhängigkeit des Drucks in dem Förderkanal zu berechnen und die Aufdickung und die Aufnahme entsprechend zu dimensionieren.

Weiterhin vorteilhaft ist die Pumpe, wenn der mindestens eine Zentrierungsring mit einer stoffschlüssigen Verbindung an dem verformbaren Element befestigt ist. Vorzugsweise sind zwei Zentrierungsringe mit einer stoffschlüssigen Verbindung an dem verformbaren Element befestigt.

Der mindestens eine Zentrierungsring kann an dem verformbaren Element insbesondere angeklebt oder eingeklebt sein. Es ist auch möglich, dass das verformbare Element an dem mindestens eine Zentrierungsring angegossen und/oder angespritzt ist. Insbesondere kann der mindestens eine Zentrierungsring mit dem verformbaren Element überspritzt sein. Hierdurch wird aus dem Zentrierungsring und dem verformbaren Element ein einheitliches, kompaktes Bauteil gebildet, welches während der Herstellung der Pumpe unproblematisch in das Pumpengehäuse eingesetzt werden kann.

In diesem Zusammenhang soll auch beschrieben werden, dass das verformbare Element nicht nur aus einem einzigen Material bestehen muss. Es ist auch ein Kompositaufbau des verformbaren Elements denkbar, bei dem bestimmte Bereiche des verformbaren Elements aus anderen Materialien hergestellt sind als andere Bereiche des verformbaren Elements. Auch ist möglich, dass in dem verformbaren Element bereichsweise gezielte Veränderungen des Materials bewirkt werden, beispielsweise durch zusätzliche Einlagen, Versteifungen oder Ähnliches. Hierdurch kann das verformbare Element jeweils bereichsweise exakt an die (lokalen) notwendigen Eigenschaften angepasst werden. Insbesondere ist es möglich, dass in dem verformbaren Element gezielt Verformungsbereiche angeordnet sind, die besonders gut verformbar sind. Solche Verformungsbereiche können beispielsweise durch elastische Einlagen in dem verformbaren Element hergestellt werden. Verformungsbereiche sind insbesondere in der Nähe der Überstände (zwischen den Überständen und einem zentralen Bereich des verformbaren Elementes) angeordnet, weil beim Fördern von Flüssigkeit mit der Pumpe in diesem Bereich die stärksten Verformungen auftreten. Als "zentraler" Bereich wird in diesem Zusammenhang ein in der Mittelebene der Pumpe liegender Bereich bezeichnet.

Im Rahmen der Erfindung auch beschrieben werden soll ein ringförmiges verformbares Element, welches in mindestens einem in axialer Richtung außen liegenden Überstand einen starren Zentrierungsring aufweist und insbesondere für eine beschriebene Pumpe geeignet ist. Besonders bevorzugt ist das verformbare Element in axialer Richtung beidseitig durch jeweils einen starren Zentrierungsring versehen bzw. begrenzt.

Die weiter oben im Zusammenhang mit der Pumpe beschriebenen besonderen Eigenschaften eines verformbaren Elements mit Zentrierungsringen sind in analoger Weise auf das verformbare Element übertragbar. Die im Folgenden im Zusammenhang mit dem verformbaren Element besonderen Eigenschaften und Merkmale sind genauso auf die Pumpe übertragbar.

Die Zentrierungsringe des verformbaren Elements sind starr. Hiermit ist gemeint, dass die Zentrierungsringe im Wesentlichen eine gegenüber dem Material des verformbaren Elements erhöhte Steifigkeit oder Festigkeit aufweisen. Diese erhöhte Steifigkeit oder Festigkeit ist dazu notwendig, dass das Material des verformbaren Elements zwischen den Zentrierungsringen und dem Pumpengehäuse eingequetscht ist. Die Zentrierungsringe können beispielsweise aus Metall sein, während das verformbare Element aus Gummimaterial ist. Die Zentrierungsringe können aber auch aus einem Kunststoffmaterial sein. Voraussetzung ist lediglich, dass die Zentrierungsringe gegenüber dem verformbaren Element eine (signifikant) erhöhte Steifigkeit bzw. Festigkeit aufweisen, und dazu geeignet sind, die weiter oben beschriebenen Funktionen (Zentrierungswirkung, Ausbildung von Abdichtkontakten etc.) zu bewirken.

Hier auch beschrieben werden soll ein Kraftfahrzeug, aufweisend eine Verbrennungskraftmaschine, eine Abgasbehandlungsvorrichtung zur Reinigung der Abgase der Verbrennungskraftmaschine sowie eine Pumpe, wobei die Pumpe dazu eingerichtet ist, ein flüssiges Additiv zur Abgasreinigung aus einem Tank zu einem Injektor zu fördern, mit dem das flüssige Additiv der Abgasbehandlungsvorrichtung zugeführt werden kann.

Die Erfindung sowie das technische Umfeld werden nachfolgend anhand der Figuren näher erläutert. Es ist darauf hinzuweisen, dass die Figuren und insbesondere die in den Figuren dargestellten Größenverhältnisse nur schematisch sind. Die Figuren dienen zur Veranschaulichung einzelner Merkmale der beschriebenen Pumpe. In den Figuren dargestellte verschiedene Ausführungsvarianten können in beliebiger Weise miteinander kombiniert werden. Insbesondere ist es nicht erforderlich, dass sämtliche in einer Figur dargestellten Merkmale jeweils als Einheit betrachtet werden. Es zeigen:
- Fig. 1:: eine isometrische Darstellung der Pumpe,
- Fig. 2:: einen Schnitt durch die in Fig. 1 dargestellte Pumpe,
- Fig. 3:: den in Fig. 2 markierten Teilschnitt B-B durch eine erste Ausführungsvariante einer beschriebenen Pumpe, die nicht beansprucht wird.
- Fig. 4:: den Fig. 2 dargestellten Teilschnitt B-B durch eine zweite Ausführungsvariante einer beschriebenen Pumpe,
- Fig. 5:: den in Fig. 2 dargestellten Teilschnitt B-B durch eine dritte Ausführungsvariante einer beschriebenen Pumpe,
- Fig. 6:: ein verformbares Element für eine beschriebene Pumpe, und
- Fig. 7:: ein Kraftfahrzeug, aufweisend eine beschriebene Pumpe.

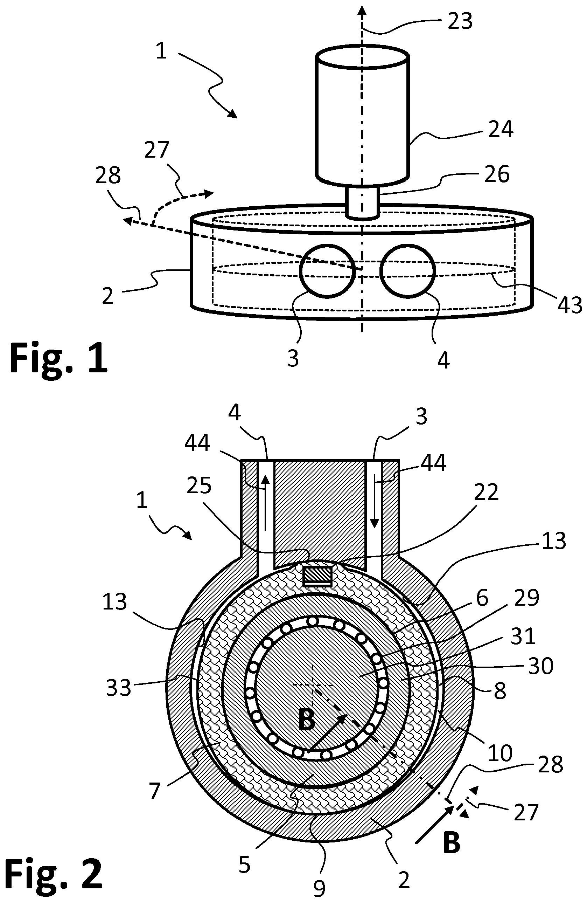

In Fig. 1 ist eine beschriebene Pumpe in einer isometrischen Darstellung gezeigt. Die Fig. 1 definiert zur besseren Orientierung in den Figuren ein Koordinatensystem, bestehend aus der einer geometrischen Achse 23, einer sich entlang dieser Achse 23 erstreckenden axialen Richtung, sowie einer radialen Richtung 28 und einer Umfangsrichtung 27. Die Pumpe 1 hat ein Pumpengehäuse 2 mit einem Einlass 3 und einem Auslass 4. In dem Pumpengehäuse 2 befinden sich ein verformbares Element 7 und ein Exzenter 5 (beide in dieser Figur nicht dargestellt). Oberhalb des Pumpengehäuses 2 ist hier ein Antrieb 24 dargestellt, mit welchem der Exzenter 5 in dem Pumpengehäuse 2 über eine Antriebswelle 26 angetrieben werden kann. Zur besseren Beschreibung der Pumpe ist auch eine Mittelebene 43 eingeführt, in der das Pumpengehäuse 2, der Exzenter 5, das verformbare Element 7 und ein Förderkanal 8 der Pumpe 1 liegen, und vorzugsweise eine Symmetrieebene für den Exzenter 5, das verformbare Element 7, usw. bildet.

Fig. 2 zeigt die Pumpe 1 in einem Schnitt durch das Pumpengehäuse 2. Zu erkennen ist das Pumpengehäuse 2 mit dem Einlass 3 und dem Auslass 4. Zur Orientierung sind auch hier die radiale Richtung 28 und die Umfangsrichtung 27 dargestellt. Innerhalb des Pumpengehäuses 2 ist der Exzenter 5 angeordnet, der in einen inneren Exzenterbereich 29, einen äußeren Lagerring 30 und ein dazwischen angeordnetes Lager 31 unterteilt ist. Zwischen einer Außenfläche 6 des Exzenters 5 und einer Innenumfangsfläche 13 des Pumpengehäuses 2 befinden sich in einem Pumpenspalt 11 das verformbare Element 7 und der Förderkanal 8, der den Einlass 3 und den Auslass 4 verbindet. Der Förderkanal 8 ist darüber hinaus zwischen dem verformbaren Element 7 und der Innenumfangsfläche 13 des Pumpengehäuses 2 angeordnet. Der Förderkanal 8 weist eine verschiebbare Abdichtung 9 auf, die dadurch realisiert ist, dass das verformbare Element 7 bereichsweise von der Außenfläche 6 des Exzenters 5 an das Pumpengehäuse 2 gedrückt wird. Durch eine Drehung des Exzenters 5 wird die verschiebbare Abdichtung 9 verschoben. Hierdurch verschieben sich verschiebbare Pumpenvolumen 10 innerhalb des Förderkanals 8 und es findet eine Förderung von Flüssigkeit mit einer Förderrichtung 44 von dem Einlass 3 zu dem Auslass 4 statt. Zwischen dem Auslass 4 und dem Einlass 3 ist eine stationäre Abdichtung 25 ausgebildet, durch die eine Rückströmung von Flüssigkeit von dem Auslass 4 zu dem Einlass 3 verhindert wird. Die stationäre Abdichtung kann justiert durch einen Stift 22 realisiert sein, der das verformbare Element 7 im Bereich der stationäre Abdichtung 25 an das Pumpengehäuse 2 unabhängig von der Position des Exzenters 5 drückt. Es sind auch weitere Ausführungsvarianten der stationären Abdichtung 25 denkbar. Das verformbare Element 7 kann beispielsweise auch an das Pumpengehäuse 2 geklebt sein. Wichtig ist lediglich, dass die Rückströmung von Flüssigkeit an der stationären Abdichtung 25 wirkungsvoll verhindert wird.

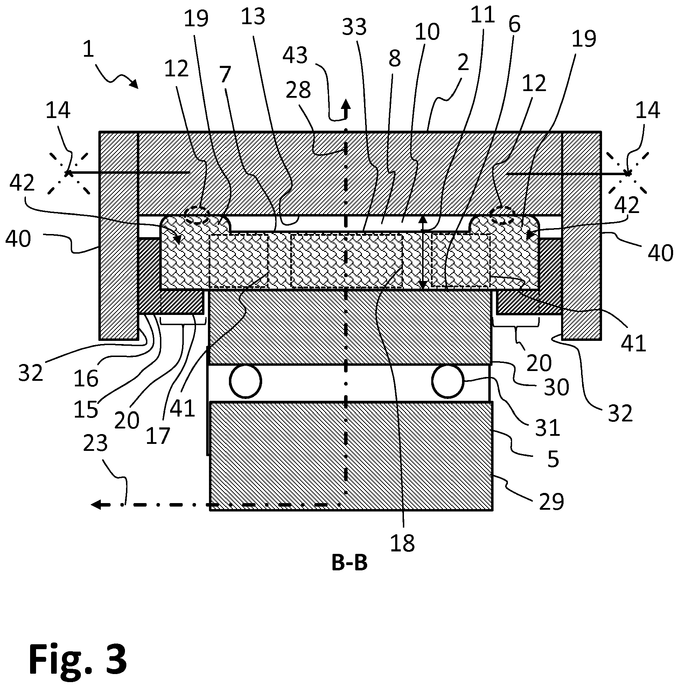

In den Fig. 3 bis 5 sind jeweils Teilschnitte B-B (wie in Fig. 2 dargestellt) durch verschiedene Ausführungsvarianten der Pumpe dargestellt. Zur Orientierung sind hier die axiale Richtung 23, die radiale Richtung 28 und die Mittelebene 43 jeweils definiert. Zu erkennen ist jeweils die Pumpe 1 mit dem Pumpengehäuse 2, dem verformbare Element 7 und dem Exzenter 5. Der Exzenter 5 ist jeweils in den Exzenterbereich 29, den Lagerring 30 und das Lager 31 aufgeteilt. Der Förderkanal 8 existiert zwischen dem Pumpengehäuse 2 und dem verformbaren Element 7 und wird von einer Innenumfangsfläche 13 des Pumpengehäuses 2 und einer Kanaloberfläche 33 des verformbaren Elements 7 begrenzt. Die Kanaloberfläche 33 und die Innenumfangsfläche 13 berühren sich jeweils an linienförmigen, ringförmigen Abdichtkontakten 12, so dass der fluiddichte Förderkanal 8 mit dem Pumpenvolumen 10 ausgebildet ist. Das verformbare Element 7 weist beidseitig starre Zentrierungsringe 16 auf. Zwischen den Zentrierungsringen 16 und dem Pumpengehäuse 2 sind jeweils Aufnahmeräume 42 ausgebildet, in welchen Überstände 20 des verformbaren Elements 7 aufgenommen sind. Die Überstande 20 des verformbaren Elements weisen jeweils Aufdickungen 19 auf, damit die Abdichtkontakte 12 sicherer und besser ausgebildet werden können. Die Zentrierungsringe 16 bilden jeweils zum Pumpengehäuse 2 Gegenhalter 15 aus, zwischen denen Aufnahmeräume 42 für das verformbare Element bzw. die Überstände 20 des verformbaren Elements 7 gebildet sind.

Die Ausführung nach Fig. 3 entspricht nicht der Erfindung und wird rein informativ beschrieben. Bei der Ausführungsvariante gemäß Fig. 3 haben die Zentrierungsringe 16 jeweils eine L-förmige Querschnittsfläche und liegen an Anlageflächen 32 des Pumpengehäuses 2 an, so dass diese nicht in Richtung einer axialen Richtung entlang der geometrischen Achse 23 nach außen verschiebbar sind, wenn ein Druck in dem Förderkanal 8 zunimmt. Hierdurch ist gleichzeitig auch eine axiale Begrenzung für das verformbare Element 7 gebildet. Die Anlageflächen 32 werden von Gehäuseflanschen 40 gebildet, die an einem Hauptteil des Pumpengehäuses 2 mit Schrauben 14 befestigt sind.

Darüber hinaus ist in Fig. 3 beispielhaft dargestellt, dass das verformbare Element verschiedene Zonen, insbesondere einen zentralen Bereich 18 und Verformungsbereiche 41 aufweisen kann. In dem zentralen Bereich 18 sind wesentlich weniger Verformungen des verformbaren Elements 7 bei der Förderung von Flüssigkeit notwendig als dies in den Verformungsbereichen 41 der Fall ist. Daher kann es vorteilhaft sein, das verformbare Element in den unterschiedlichen Bereichen mit verschiedenen Materialeigenschaften auszuführen. Beispielsweise kann das verformbare Element 7 in dem zentralen Bereich 18 eine erhöhte Steifigkeit aufweisen und in den Verformungsbereichen 41 eine erhöhte Flexibilität. Dies kann beispielsweise durch elastische Einlagen in den Verformungsbereichen 41 oder starre Einlagen bzw. Versteifungen in dem zentralen Bereich 18 realisiert sein.

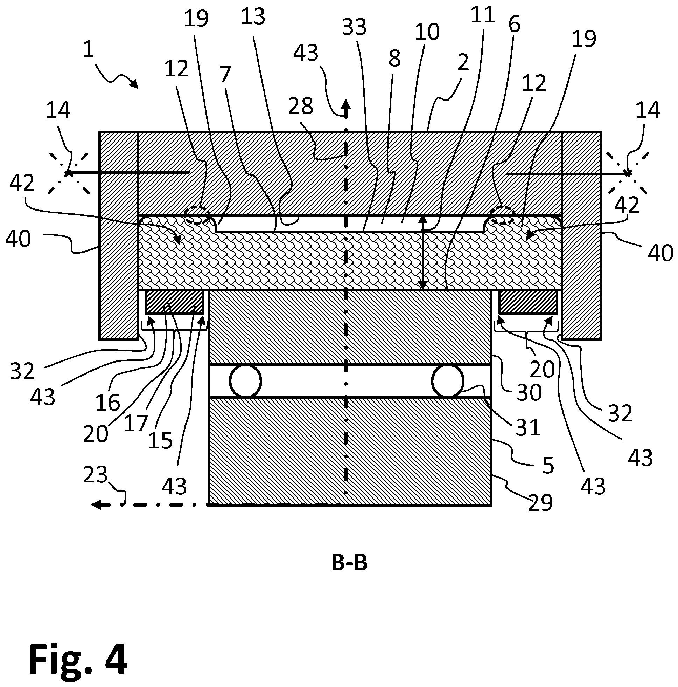

Bei der Ausführungsvariante gemäß Fig. 4 haben die Zentrierungsringe 16 jeweils eine rechteckige Querschnittsfläche und sind innerhalb des verformbaren Elements 7 angeordnet. Die Zentrierungsringe sind jeweils durch eine Mittelebene 43 von dem Pumpengehäuse 2 und dem Exzenter 5 beabstandet, um eine freie Beweglichkeit der Zentrierungsringe 16 zu ermöglichen. Das verformbare Element liegt in axialer Richtung entlang der geometrischen Achse 23 außen direkt an Anlageflächen 32 des Pumpengehäuses 2 an. Die Anlageflächen 32 des Pumpengehäuses 2 werden von Gehäuseflanschen 40 gebildet, die beispielsweise mit Schrauben 14 an dem Hauptteil des Pumpengehäuses 2 fixiert sein können.

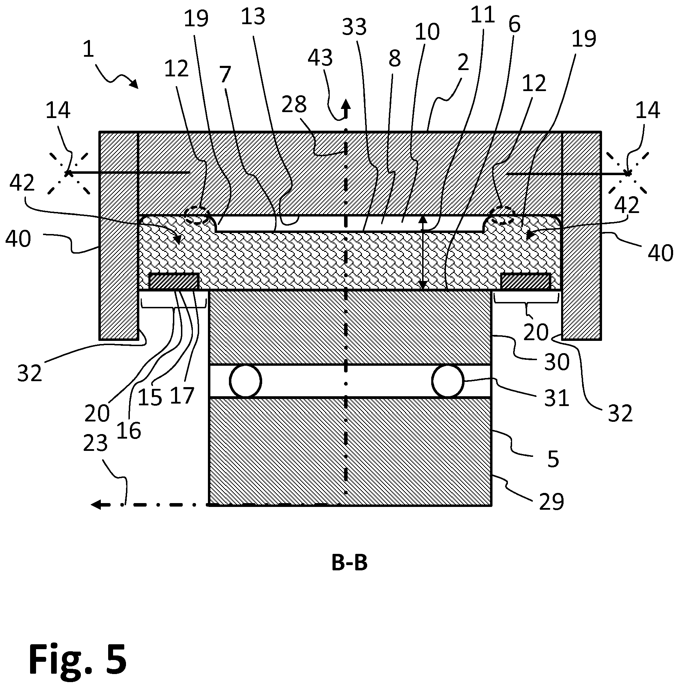

Die Ausführungsvariante in Fig. 5 entspricht im Wesentlichen der in Fig. 4 dargestellten Ausführungsvariante einer Pumpe. Hier sind die Zentrierungsringe 16 mit der rechteckigen Querschnittsfläche 17, die den Gegenhalter 15 ausbilden, in das verformbare Element 7 eingelassen.

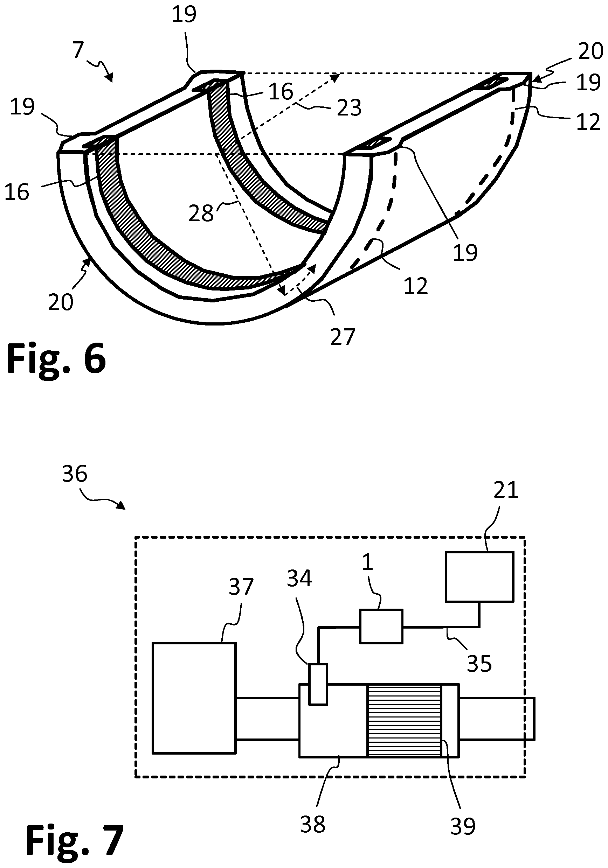

In Fig. 6 ist beispielhaft eine besonders einfache Ausführungsvariante des verformbaren Elements 7 mit den Zentrierungsringen 16 in einer dreidimensionalen Darstellung gezeigt. Das verformbare Element 7 ist in Figur 6 nur zur Hälfte dargestellt, damit eine Innenseite des verformbaren Elementes (7) mit den Zentrierungsringen 16 zu erkennen ist. Hier dargestellt ist das verformbare Element (7) der Ausführungsvariante der Pumpe aus Fig. 5. Zur Orientierung sind jeweils die geometrische Achse 23, die radiale Richtung 28 und die Umfangsrichtung 27 dargestellt. Zwei Zentrierungsringe 16 sind jeweils im Bereich der Überstände 20 in das verformbare Element 7 eingelassen. Im Bereich der Überstände des verformbaren Elementes 7 sind auch Aufdickungen 19 des verformbaren Elementes 7 zu erkennen, an denen jeweils die gestrichelt angedeuteten Abdichtkontakte 12 des verformbaren Elementes 7 mit dem hier nicht dargestellten Pumpengehäuse ausgebildet sind.

Fig. 7 zeigt ein Kraftfahrzeug 36, aufweisend eine Verbrennungskraftmaschine 37 und eine Abgasbehandlungsvorrichtung 38 zur Reinigung der Abgase der Verbrennungskraftmaschine 37. Die Abgasbehandlungsvorrichtung 38 weist einen SCR-Katalysator 39 auf, mit welchem die Abgase der Verbrennungskraftmaschine 37 mit dem Verfahren der selektiven katalytischen Reduktion gereinigt werden können. Der Abgasbehandlungsvorrichtung 38 ist dazu mit einem Injektor 34 ein flüssiges Additiv zuführbar, welches von einer Pumpe 1 entlang einer Leitung 35 aus einem Tank 21 dosiert bereitgestellt wird.

### Bezugszeichenliste

- 1: Pumpe
- 2: Pumpengehäuse
- 3: Einlass
- 4: Auslass
- 5: Exzenter
- 6: Außenfläche
- 7: verformbares Element
- 8: Förderkanal
- 9: verschiebbare Abdichtung
- 10: Pumpenvolumen
- 11: Pumpenspalt
- 12: Abdichtkontakt
- 13: Innenumfangsfläche
- 14: Schraube
- 15: Gegenhalter
- 16: Zentrierungsring
- 17: Querschnittsfläche
- 18: zentraler Bereich
- 19: Aufdickung
- 20: Überstand
- 21: Tank
- 22: Stift
- 23: Geometrische Achse
- 24: Antrieb
- 25: Stationäre Abdichtung
- 26: Antriebswelle
- 27: Umfangsrichtung
- 28: radiale Richtung
- 29: Exzenterbereich
- 30: Lagerring
- 31: Lager
- 32: Anlagefläche
- 33: Kanaloberfläche
- 34: Injektor
- 35: Leitung
- 36: Kraftfahrzeug
- 37: Verbrennungskraftmaschine
- 38: Abgasbehandlungsvorrichtung
- 39: SCR-Katalysator
- 40: Gehäuseflansch
- 41: Verformungsbereich
- 42: Aufnahmeraum
- 43: Mittelebene
- 44: Förderrichtung

## Patentansprüche

1. Pumpe (1) zur Förderung einer Flüssigkeit, aufweisend zumindest ein Pumpengehäuse (2) mit mindestens einem Einlass (3) und mindestens einem Auslass (4), und mit einer rotationssymmetrischen Innenumfangsfläche (13) und einer geometrischen Achse (23), wobei innerhalb des Pumpengehäuses (2) ein Exzenter (5) angeordnet ist und der Exzenter (5) um die geometrische Achse (23) relativ zu dem Pumpengehäuse (2) drehbar ist, wobei in einem Pumpenspalt (11) zwischen der Innenumfangsfläche (13) des Pumpengehäuses (2) und einer Außenfläche (6) des Exzenters (5) ein verformbares Element (7) angeordnet ist und wobei mit dem verformbaren Element (7) und der Innenumfangsfläche (13) des Pumpengehäuses (2) ein Förderkanal (8) von dem mindestens einen Einlass (3) zu dem mindestens einen Auslass (4) ausgebildet ist und wobei weiter das verformbare Element (7) von der Außenfläche (6) des Exzenters (5) abschnittsweise derart gegen das Pumpengehäuse (2) gedrückt wird, dass mindestens eine verschiebbare Abdichtung (9) des Förderkanals (8) und zumindest ein geschlossenes Pumpenvolumen (10) in dem Förderkanal (8) ausgebildet sind, die zur Förderung der Flüssigkeit durch eine Drehung des Exzenters (5) entlang des Förderkanals (8) von dem Einlass (3) zu dem Auslass (4) verschiebbar sind, **dadurch gekennzeichnet, dass** das verformbare Element (7) in Richtung der geometrischen Achse (23) an einer oder beiden Seiten einen Überstand (20) über die das verformbare Element (7) berührende Außenfläche (6) des Exzenters (5) aufweist und in mindestens einem Überstand (20) innen einen Zentrierungsring (16) aufweist, wobei der mindestens eine Zentrierungsring (16) eine rechteckige Querschnittsfläche (17) aufweist und innerhalb des verformbaren Elementes (7) angeordnet ist.

2. Pumpe (1) nach Patentanspruch 1, wobei der mindestens eine Zentrierungsring (16) in das verformbare Element (7) eingelassen ist.

3. Pumpe (1) nach einem der vorhergehenden Patentansprüche, wobei der mindestens eine ringförmige Überstand (20) des verformbaren Elementes (7) zwischen dem Pumpen-gehäuse (2) und dem mindestens einen Zentrierungsring (16) in radialer Richtung (28) verspannt ist.

4. Pumpe (1) nach einem der vorhergehenden Patentansprüche, wobei der mindestens eine Zentrierungsring (16) in Richtung der geometrischen Achse (23) an einer Anlagefläche (32) des Pumpengehäuses (2) anliegt.

5. Pumpe (1) nach einem der vorhergehenden Patentansprüche, wobei der mindestens eine Zentrierungsring (16) in radialer Richtung (28) beweglich gelagert ist.

6. Pumpe (1) nach einem der vorhergehenden Patentansprüche, wobei der mindestens eine Überstand (20) des verformbaren Elementes (7) in axialer Richtung seitlich an einer Anlagefläche (32) des Pumpengehäuses (2) anliegt.

7. Pumpe (1) nach einem der vorhergehenden Patentansprüche, wobei das Pumpengehäuse (2) eine Innenumfangsfläche (13) hat, an dem die Außenfläche (6) des verformbaren Elementes (7) anliegt, wobei der mindestens eine Überstand (20) des verformbaren Elementes (7) mindestens einen ringförmigen Abdichtkontakt (12) an der Innenumfangsfläche (13) des Pumpengehäuses (2) ausbildet.

8. Pumpe (1) nach Patentanspruch 7, wobei der mindestens eine Überstand (20) des verformbaren Elementes (7) an der Außenfläche (6) mindestens eine umlaufende Aufdickung (19) aufweist.

9. Pumpe (1) nach einem der vorhergehenden Patentansprüche, wobei der mindestens eine Zentrierungsring (16) mit einer stoffschlüssigen Verbindung an dem verformbaren Element (7) befestigt ist.

10. Kraftfahrzeug (36), aufweisend eine Verbrennungskraftmaschine (37), eine Abgasbehandlungsvorrichtung (38) zur Reinigung der Abgase der Verbrennungskraftmaschine (37) sowie eine Pumpe (1) nach einem der Patentansprüche 1 bis 9, wobei die Pumpe (1) dazu eingerichtet ist, ein flüssiges Additiv zur Abgasreinigung aus einem Tank (21) zu einem Injektor (34) zu fördern, mit dem das flüssige Additiv der Abgasbehandlungsvor-richtung (38) zugeführt werden kann.

## Claims

1. Pump (1) for delivering a liquid, having at least one pump housing (2) with at least one inlet (3) and at least one outlet (4), and having a rotationally symmetrical inner circumferential face (13) and having a geometric axis (23), wherein an eccentric (5) is arranged within the pump housing (2) and the eccentric (5) is rotatable relative to the pump housing (2) about the geometric axis (23), wherein a deformable element (7) is arranged in a pump gap (11) between the inner circumferential face (13) of the pump housing (2) and an outer face (6) of the eccentric (5), and wherein a delivery duct (8) is formed from the at least one inlet (3) to the at least one outlet (4) by the deformable element (7) and by the inner circumferential face (13) of the pump housing (2), and wherein furthermore, the deformable element (7) is pressed against the pump housing (2) in sections by the outer face (6) of the eccentric (5) such that at least one displaceable seal (9) of the delivery duct (8) and at least one closed pump volume (10) are formed in the delivery duct (8), these being displaceable along the delivery duct (8) from the inlet (3) to the outlet (4) by means of a rotation of the eccentric (5) for the delivery of the liquid, **characterized in that** the deformable element (7) has a projection (20) on one or both sides in the direction of the geometric axis (23) beyond that outer face (6) of the eccentric (5) which makes contact with the deformable element (7), and has a centring ring (16) on the inside in at least one projection (20), the at least one centring ring (16) having a rectangular cross-sectional area (17) and being arranged within the deformable element (7).

2. Pump (1) according to Patent Claim 1, the at least one centring ring (16) being embedded into the deformable element (7) .

3. Pump (1) according to either of the preceding patent claims, the at least one annular projection (20) of the deformable element (7) being braced in the radial direction (28) between the pump housing (2) and the at least one centring ring (16).

4. Pump (1) according to any of the preceding patent claims, the at least one centring ring (16) bearing against a contact face (32) of the pump housing (2) in the direction of the geometric axis (23) .

5. Pump (1) according to any of the preceding patent claims, the at least one centring ring (16) being mounted such that it can be moved in the radial direction (28).

6. Pump (1) according to any of the preceding patent claims, the at least one projection (20) of the deformable element (7) bearing in the axial direction laterally against a contact face (32) of the pump housing (2).

7. Pump (1) according to any of the preceding patent claims, the pump housing (2) having an inner circumferential face (13), against which the outer face (6) of the deformable element (7) bears, the at least one projection (20) of the deformable element (7) forming at least one annular sealing contact (12) on the inner circumferential face (13) of the pump housing (2).

8. Pump (1) according to Patent Claim 7, the at least one projection (20) of the deformable element (7) having at least one circumferential thickened portion (19) on the outer face (6) .

9. Pump (1) according to any of the preceding patent claims, the at least one centring ring (16) being fastened to the deformable element (7) by way of an integrally joined connection.

10. Motor vehicle (36), having an internal combustion engine (37), an exhaust gas treatment apparatus (38) for purifying the exhaust gases of the internal combustion engine (37), and a pump (1) according to any of Patent Claims 1 to 9, the pump (1) being set up to deliver a liquid additive for exhaust gas purification from a tank (21) to an injector (34), by way of which the liquid additive can be fed to the exhaust gas treatment apparatus (38).

## Revendications

1. Pompe (1) servant à transporter un liquide, présentant au moins un corps de pompe (2) avec au moins une entrée (3) et avec au moins une sortie (4), et avec une face périphérique intérieure à symétrie de rotation (13) et un axe géométrique (23), dans laquelle un excentrique (5) est disposé à l'intérieur du corps de pompe (2) et l'excentrique (5) peut tourner autour de l'axe géométrique (23) par rapport au corps de pompe (2), dans laquelle un élément déformable (7) est disposé dans une fente de pompe (11) entre la face périphérique intérieure (13) du corps de pompe (2) et une face extérieure (6) de l'excentrique (5) et dans laquelle un canal de transport (8) depuis ladite au moins une entrée (3) jusqu'à ladite au moins une sortie (4) est formé avec l'élément déformable (7) et la face périphérique intérieure (13) du corps de pompe (2), et dans laquelle en outre l'élément déformable (7) est pressé par la face extérieure (6) de l'excentrique (5) en partie contre le corps de pompe (2) de telle manière qu'il se forme au moins une étanchéité glissante (9) du canal de transport (8) et au moins un volume de pompe fermé (10) dans le canal de transport (8), qui peuvent glisser le long du canal de transport (8) de l'entrée (3) à la sortie (4) pour le transport du liquide par une rotation de l'excentrique (5), **caractérisée en ce que** l'élément déformable (7) présente dans la direction de l'axe géométrique (23) sur un côté ou sur les deux côtés un débordement (20) au-delà de la face extérieure (6) de l'excentrique (5) touchant l'élément déformable (7) et présente dans au moins un débordement (20) intérieurement une bague de centrage (16), dans laquelle ladite au moins une bague de centrage (16) présente une section transversale rectangulaire (17) et est disposée à l'intérieur de l'élément déformable (7).

2. Pompe (1) selon la revendication 1, dans laquelle ladite au moins une bague de centrage (16) est insérée dans l'élément déformable (7).

3. Pompe (1) selon l'une quelconque des revendications précédentes, dans laquelle ledit au moins un débordement annulaire (20) de l'élément déformable (7) est encastré en direction radiale (28) entre le corps de pompe (2) et ladite au moins une bague de centrage (16).

4. Pompe (1) selon l'une quelconque des revendications précédentes, dans laquelle ladite au moins une bague de centrage (16) s'applique dans la direction de l'axe géométrique (23) sur une face d'appui (32) du corps de pompe (2).

5. Pompe (1) selon l'une quelconque des revendications précédentes, dans laquelle ladite au moins une bague de centrage (16) est montée de façon mobile en direction radiale (28) .

6. Pompe (1) selon l'une quelconque des revendications précédentes, dans laquelle ledit au moins un débordement (20) de l'élément déformable (7) s'applique en direction axiale latéralement sur une face d'appui (32) du corps de pompe (2).

7. Pompe (1) selon l'une quelconque des revendications précédentes, dans laquelle le corps de pompe (2) comporte une face périphérique intérieure (13), sur laquelle s'applique la face extérieure (6) de l'élément déformable (7), dans laquelle ledit au moins un débordement (20) de l'élément déformable (7) forme au moins un contact d'étanchéité annulaire (12) sur la face périphérique intérieure (13) du corps de pompe (2).

8. Pompe (1) selon la revendication 7, dans laquelle ledit au moins un débordement (20) de l'élément déformable (7) présente sur la face extérieure (6) au moins une surépaisseur périphérique (19).

9. Pompe (1) selon l'une quelconque des revendications précédentes, dans laquelle ladite au moins une bague de centrage (16) est fixée à l'élément déformable (7) par une liaison matérielle.

10. Véhicule automobile (36), présentant un moteur à combustion interne (37), un dispositif de traitement des gaz d'échappement (38) pour la purification des gaz d'échappement du moteur à combustion interne (37), ainsi qu'une pompe (1) selon l'une quelconque des revendications 1 à 9, dans lequel la pompe (1) est configurée pour transporter un additif liquide destiné à la purification de gaz d'échappement depuis un réservoir (21) jusqu'à un injecteur (34), avec lequel l'additif liquide peut être fourni au dispositif de traitement des gaz d'échappement (38).
